# EUROPÄISCHE PATENTSCHRIFT

(11) **EP 3 175 690 B1**
(45) Veröffentlichungstag und Bekanntmachung des Hinweises auf die Patenterteilung: **06.05.2020**
(21) Anmeldenummer: 16197432.4
(22) Anmeldetag: 04.11.2016
(51) Int. Cl.: A01B 35/24, A01C 5/06, A01D 80/02

(54) **AUFSATZ FÜR STRIEGEL**
ATTACHMENT FOR STRAW HARROW
ADAPTATEUR POUR UN HERSE

(30) Priorität: 06.11.2015 DE 202015105952 U
(43) Veröffentlichungstag der Anmeldung: 07.06.2017
(73) Patentinhaber: Wallner, Klaus, 94439 Rossbach-Münchsdorf Bayern (DE)
(72) Erfinder: Wallner, Klaus, 94439 Rossbach-Münchsdorf Bayern (DE)
(74) Vertreter: Lichtnecker, Markus Christoph

(56) Entgegenhaltungen:
- EP-A1- 1 487 249
- WO-A1-98/31208
- DE-A1- 10 154 475
- DE-C- 246 788
- US-A- 3 261 153
- US-A- 4 834 190

## Beschreibung

Die Erfindung betrifft einen Zinken eines Striegels einer landwirtschaftlichen Bodenbearbeitungsvorrichtung.

Bodenbearbeitungsvorrichtungen mit einer Vielzahl an in Reihen angeordneten Striegeln sind grundsätzlich bekannt und werden auch als Strohstriegel bezeichnet. Diese Bodenbearbeitungsvorrichtungen verteilen beispielsweise Stroh auf die gesamte Arbeitsbreite. Ferner kommen diese beim Ackerbau bei der Unkrautbekämpfung und/oder Bodenlockerung zum Einsatz. Durch das Striegeln wird der Boden aufgekratzt, so dass Ausfallgetreide und Unkraut bzw. Ungräser schneller auskeimen können. Die Keimlinge können in einem weiteren Arbeitsgang beispielsweise eingeackert und als Naturdünger verwendet werden. Zudem können durch das Striegeln Schädlinge wie Schnecken bzw. Schneckeneier an die Oberfläche befördert werden, an welcher diese austrocknen.

Ferner können Gülle, Dünger und/oder beispielswiese Mulchstroh durch einen Strohstriegel in den Boden eingearbeitet werden. Der Strohstriegel ermöglicht durch seine vergleichsweise große Arbeitsbreite von bis zu rund 12 Metern ein effizientes Arbeiten.

US 3,261,153 A offenbart einen hülsenförmigen Aufsatz für einen Zinken. Durch den austauschbaren Aufsatz soll die Lebensdauer eines Zinkens erhöht werden.

Nachteilig an herkömmlich eingesetzten Striegeln ist jedoch, dass die Zinken relativ schmal und weit voneinander beabstandet sind, so dass durch einen Zinken nur ein kleiner Bereich des Bodens bearbeitet wird. Auch haben die Zinken einen festen Durchmesser, welcher jedoch nicht für alle Anbauböden gleichermaßen geeignet ist. So ist beispielsweise ein Zinken mit einem Durchmesser von 16 mm nicht für die Bearbeitung eines Getreidefeldes im Frühjahr geeignet. Für unterschiedliche Böden und Einsatzbereiche muss bisher somit auf separate Bearbeitungsvorrichtungen zurückgegriffen werden, was mit hohen Kosten verbunden ist.

Es ist daher eine Aufgabe der Erfindung, einen Zinken eines Striegels, einen Striegel bzw. ein Bodenbearbeitungsgerät derart zu verbessern, dass eine variable und effiziente Bearbeitung des Bodens ermöglicht wird.

Die Lösung dieser Aufgabe erfolgt durch einen Aufsatz mit den Merkmalen des Anspruchs 1, einen Striegel mit den Merkmalen des Anspruchs 12 sowie durch eine Bodenbearbeitungsvorrichtung mit den Merkmalen des Anspruchs 15.

Erfindungsgemäß ist ein Aufsatz für einen Zinken eines Striegels einer Bodenbearbeitungsvorrichtung vorgesehen, welcher dazu ausgebildet ist, den Wirkbereich des Zinkens zu verändern.

Der Aufsatz kann somit insbesondere dazu verwendet werden, herkömmliche Striegel, welche zur Bearbeitung des Bodens eingesetzt werden, zu modifizieren. So kann beispielsweise der Durchmesser des Zinkens je nach Anforderung vergrößert werden.

Der Wirkbereich bezeichnet insbesondere den Bereich, in dem der Zinken auf den Boden einwirkt. Dabei ist sowohl eine Wirkbreite, also die Breite des Abschnitts, der durch einen Zinken bearbeitet wird, als auch eine Wirktiefe, also die Eindringtiefe des Zinkens in den Boden, mit umfasst.

Der Zinken kann insbesondere stabförmig ausgebildet sein und beispielsweise eine Länge zwischen 70 cm und 90 cm aufweisen. Vorzugsweise hat der Zinken einen runden Querschnitt, beispielsweise mit einem Durchmesser zwischen 12 mm und 16 mm. Der Zinken kann aus Stahl, insbesondere Federstahl, gefertigt sein.

Der Striegel umfasst einen oder mehrere Zinken sowie eine Befestigungsvorrichtung zum Befestigen an einer Bodenbearbeitungsvorrichtung. Ein Striegel mit zwei miteinander, insbesondere einstückig, verbundenen Zinken wird auch als Doppelzinken bezeichnet. Die beiden Zinken sind dabei über eine Feder miteinander verbunden, welche einerseits als Befestigungsvorrichtung und andererseits als seitlicher Stoßdämpfer dient. Unebenheiten im Boden können somit seitlich kompensiert werden.

Durch den Aufsatz kann ein herkömmlicher Striegel variabel an die Erfordernisse angepasst werden. Kostspielige Zweitgeräte für spezielle Anwendungen sind damit nicht nötig. Ferner ermöglicht der Aufsatz beispielsweise bei einer Vergrößerung des Wirkbereichs des Zinkens eine effiziente Bearbeitung des Bodens.

Der Aufsatz umfasst eine Hülse. Die Hülse kann insbesondere aus Stahl bestehen, beispielsweise aus Hardox ®. Vorzugsweise ist die Hülse zylinderförmig ausgebildet. Die Hülse kann somit beispielsweise über den Zinken geschoben werden. Eine einfache Montage wird dadurch gewährleistet.

Der Aufsatz weist ein Verbreiterungselement auf, welches einen größeren Durchmesser als die Hülse aufweist. Das Verbreiterungselement kann insbesondere aus Stahl bestehen, beispielsweise aus Hardox ®. Die Hülse dient also in erster Linie der Montage bzw. der Befestigung am Zinken. Durch das Verbreiterungselement wird hingegen der Wirkbereich des Zinkens vergrößert. Insbesondere wird der Durchmesser des Zinkens an einem Endbereich vergrößert, z.B. verdoppelt, verdreifacht, vervierfacht, verfünffacht oder mehr.

Das Verbreiterungselement umfasst einen flächigen Vorsprung, welcher symmetrisch, über die Hülse hervorsteht. Das Verbreiterungselement kann insbesondere radial vorstehen und z.B. eckig, oval oder rund ausgebildet sein. Das Verbreiterungselement kann mit der Hülse beispielsweise verlötet, verschweißt oder einstückig mit diesem geformt sein. Vorzugsweise ist das Verbreiterungselement plattenartig ausgebildet.

Weiterbildungen der Erfindung sind auch den abhängigen Ansprüchen, der Beschreibung sowie den beigefügten Zeichnungen zu entnehmen.

Nach einer Ausführungsform ist der Aufsatz dazu ausgebildet ist, den Wirkbereich des Zinkens zu vergrößern, insbesondere zu verdoppeln, zu verdreifachen, zu vervierfachen oder zu verfünffachen. Vorzugsweise kann der Wirkbereich eines Zinkens verbreitert werden. So kann ein größerer Abschnitt des Bodens durch den Zinken bearbeitet werden als ohne den Aufsatz. Ferner kann der Zinken aufgrund des Aufsatzes gegebenenfalls tiefer in das Erdreich eindringen. Auch die Wirktiefe kann durch den Aufsatz somit vergrößert werden.

Nach einer weiteren Ausführungsform ist der Innendurchmesser der Hülse größer als der Außendurchmesser des Zinkens. Der Zinken wird somit innerhalb der Hülse aufgenommen.

Nach einer weiteren Ausführungsform ist das Verbreiterungselement an einem unteren Endbereich der Hülse angeordnet. Auf diese Weise ist sichergestellt, dass das Verbreiterungselement mit dem Boden in Kontakt kommt und diesen bearbeitet.

Gemäß einer weiteren Ausführungsform umfasst das Verbreiterungselement eine, insbesondere zentrale, Aussparung für einen Zinken. So kann die Hülse zusammen mit dem Verbreiterungselement relativ zum Zinken in der Höhe verstellt und an der gewünschten Position, insbesondere an einem unteren Bereich des Zinkens, fixiert werden. Alternativ ist jedoch auch denkbar, dass das Verbreiterungselement keine Aussparung aufweist und die Hülse verschließt.

Gemäß einer weiteren Ausführungsform ist das Verbreiterungselement, insbesondere der flächige Vorsprung, als Scheibe ausgebildet. Vorzugsweise weist die Scheibe ein zentrales Loch auf. Der Durchmesser der Scheibe kann beispielsweise zwischen 40 mm und 70 mm, vorzugsweise etwa 60 mm, betragen. Der Lochdurchmesser kann dem Innen- bzw. Außendurchmesser der Hülse entsprechen.

Nach einer weiteren Ausführungsform weist der Aufsatz ein Befestigungsmittel zum Befestigen an einem Zinken auf. Der Aufsatz kann dadurch am Zinken befestigt werden, ohne dass sich dieser während der Bodenbearbeitung ungewollt löst. Als Befestigungsmittel können beispielsweise Dreh-, Klemm-, Klipp-, Rast- bzw. Schraubverbindungen und/oder nicht lösbare Klebe-, Löt- bzw. Schweißverbindungen zum Einsatz kommen.

Gemäß einer weiteren Ausführungsform ist der Aufsatz zum lösbaren Befestigen an einem Zinken ausgebildet. Der Aufsatz kann somit zur Anpassung an andere Gegebenheiten beispielsweise entfernt bzw. ausgetauscht werden.

Nach einer weiteren Ausführungsform umfasst das Befestigungsmittel eine Klemm- und/oder Schraubeinheit. Insbesondere kann die Hülse als Klemmhülse ausgebildet sein, welche z.B. über Schrauben festgeklemmt werden kann. Die Hülse kann vorzugsweise ein Gewinde umfassen, in welche Schrauben eingedreht werden können. So kann die Hülse z.B. an der Außenummantelung eine oder mehrere Aussparungen aufweisen, an deren Umrandung Schraubenmuttern festgeschweißt oder festgelötet werden. Die Hülse kann somit stufenlos an einer beliebigen Position am Zinken befestigt werden.

Die Erfindung betrifft auch einen Striegel mit zumindest einem Zinken und einem erfindungsgemäßen Aufsatz.

Gemäß einer Ausführungsform ist der Striegel als Doppelzinken mit zwei einstückig geformten Zinken ausgebildet. Zwischen den Zinken kann eine Feder ausgebildet sein.

Nach einer weiteren Ausführungsform ist der Zinken stabförmig ausgebildet. Insbesondere weist dieser einen runden Querschnitt auf. Eine Hülse des Aufsatzes kann somit passgenau aufgeschoben werden.

Gemäß einer weiteren Ausführungsform weist der Zinken zumindest eine Aussparung, insbesondere eine sich quer durch den Zinken erstreckende Öffnung, zum Befestigen des Aufsatzes auf. Für einen besseren Halt des Aufsatzes am Zinken kann somit z.B. eine Schraube bzw. ein Stift durch die Hülse hindurch in die Aussparung des Zinkens gesteckt werden. Um die Hülse an verschiedenen Positionen befestigen zu können, kann der Zinken auch mehrere Aussparungen aufweisen.

Die Erfindung betrifft ferner eine Bodenbearbeitungsvorrichtung mit zumindest einem erfindungsgemäßen Striegel. Insbesondere können zwischen 100 und 200, insbesondere 150, Zinken bzw. zwischen 50 und 100, insbesondere 75, Doppelzinken vorgesehen sein. Die Zinken können insbesondere hydraulisch verstellbar sein, um eine gute Anpassung an den Boden zu ermöglichen.

Alle hier beschriebenen Aspekte, Ausführungsformen und Merkmale der Erfindung können, insbesondere auch losgelöst von der konkreten Ausgestaltung, in deren Zusammenhang sie erwähnt werden, jeweils miteinander kombiniert werden. Insbesondere können alle Gegenstände der abhängigen Ansprüche untereinander und mit jedem Gegenstand der unabhängigen Ansprüche kombiniert werden.

Die Erfindung wird im Folgenden beispielhaft unter Bezugnahme auf die Zeichnungen beschrieben. Es zeigen:
- Fig. 1: eine Vorderansicht eines herkömmlichen Doppelstriegels,
- Fig. 2: eine Vorderansicht einer ersten Ausführungsform eines erfindungsgemäßen Aufsatzes, und
- Fig. 3: eine Unteransicht des Aufsatzes gemäß Fig. 2.

Zunächst ist zu bemerken, dass die dargestellten Ausführungsformen rein beispielhafter Natur sind. Insbesondere kann anstelle eines Doppelstriegels auch ein einfacher Striegel verwendet werden. Die Merkmale einer Ausführungsform können auch beliebig mit Merkmalen einer anderen Ausführungsform kombiniert werden.

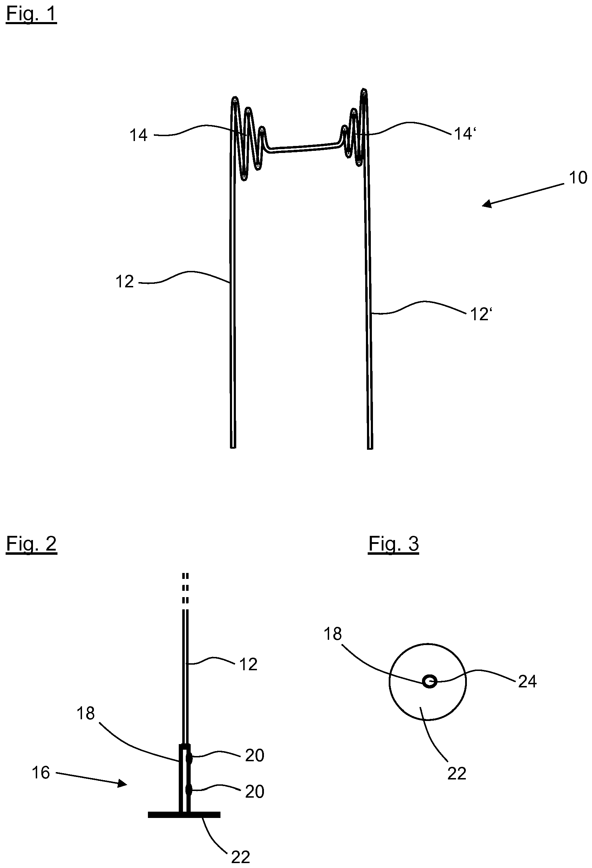

Fig. 1 zeigt einen herkömmlichen Striegel 10 mit zwei Zinken 12, 12'. Die Zinken 12, 12' sind über Federn 14, 14' miteinander verbunden. Der Striegel 10, welcher auch als Doppelzinken bezeichnet wird, ist einstückig geformt. Ein Metallstab mit einem runden Durchmesser wird dabei teilweise spiralförmig verbogen. Die Spiralen bilden die Federn 14, 14', welche einerseits eine seitliche Stoßfederung bewirken und andererseits als Befestigungsvorrichtung dienen.

Um den Wirkbereich der Zinken 12, 12' zu vergrößern, wird, wie in Fig. 2 dargestellt, ein Aufsatz 16 an einem Zinken 12 befestigt. Dies ist rein beispielhaft. Vorzugsweise werden an sämtlichen Zinken 12, 12' insbesondere baugleiche Aufsätze 16 angebracht.

Der Aufsatz 16 umfasst eine zylinderförmige Hülse 18. Die Hülse 18 weist einen größeren Durchmesser als der Zinken 12 auf und kann somit über den Zinken 12 geschoben werden. Über Schrauben, die als Befestigungsmittel 20 dienen, wird die Hülse 18 am Zinken 12 festgeklemmt.

An einem unteren Endbereich der Hülse 18 weist der Aufsatz 16 ein als Scheibe 22 ausgebildetes Verbreiterungselement auf.

Wie in Fig. 3 zu sehen ist, weist die Scheibe 22 eine zentrale Aussparung 24 zur Aufnahme des Zinkens 12 auf. Alternativ kann die Scheibe 22 auch geschlossen sein. Die Höhenverstellbarkeit bezüglich des Zinkens 12 wird dadurch jedoch eingeschränkt. Die Form des Verbreiterungselements 22 ist rein beispielhaft. So sind auch z.B. rechteckförmige, elliptische oder andere Gestaltungen denkbar.

### Bezugszeichenliste

- 10: Striegel, Doppelzinken
- 12, 12': Zinken
- 14, 14': Feder, Befestigungsvorrichtung
- 16: Aufsatz
- 18: Hülse
- 20: Schraube, Befestigungsmittel
- 22: Scheibe, Verbreiterungselement
- 24: Aussparung

## Patentansprüche

1. Aufsatz (16) für einen Zinken (12, 12') eines Striegels (10) einer Bodenbearbeitungsvorrichtung,
wobei der Aufsatz (16) dazu ausgebildet ist, den Wirkbereich des Zinkens (12, 12') zu verändern, wobei
der Aufsatz (16) eine Hülse (18) aufweist, **dadurch gekennzeichnet, dass** der Aufsatz (16) ein Verbreiterungselement (22) aufweist, welches einen größeren Durchmesser als die Hülse (18) aufweist,
wobei
das Verbreiterungselement (22) einen flächigen Vorsprung umfasst, welcher symmetrisch über die Hülse (18) hervorsteht.

2. Aufsatz (16) nach Anspruch 1,
**dadurch gekennzeichnet,**
**dass** das Verbreiterungselement (22) eckig, oval oder rund ausgebildet ist.

3. Aufsatz (16) nach Anspruch 1 oder 2,
**dadurch gekennzeichnet,**
**dass** der flächige Vorsprung als Scheibe (22) ausgebildet ist.

4. Aufsatz (16) nach Anspruch 3,
**dadurch gekennzeichnet,**
**dass** der Durchmesser der Scheibe (22) zwischen 40 mm und 70 mm, vorzugsweise 60 mm, beträgt.

5. Aufsatz (16) nach einem der vorhergehenden Ansprüche,
**dadurch gekennzeichnet,**
**dass** der Aufsatz (16) dazu ausgebildet ist, den Wirkbereich des Zinkens (12, 12') zu vergrößern, insbesondere mindestens zu verdoppeln, zu verdreifachen, zu vervierfachen oder zu verfünffachen.

6. Aufsatz (16) nach einem der vorhergehenden Ansprüche,
**dadurch gekennzeichnet,**
**dass** der Innendurchmesser der Hülse (18) größer ist als der Außendurchmesser des Zinkens (12, 12').

7. Aufsatz (16) nach einem der vorhergehenden Ansprüche,
**dadurch gekennzeichnet,**
**dass** das Verbreiterungselement (22) an einem unteren Endbereich der Hülse (18) angeordnet ist.

8. Aufsatz (16) nach einem der vorhergehenden Ansprüche,
**dadurch gekennzeichnet,**
**dass** das Verbreiterungselement (22) eine Aussparung (24) für einen Zinken (12, 12') umfasst.

9. Aufsatz (16) nach einem der vorhergehenden Ansprüche,
**dadurch gekennzeichnet,**
**dass** das Verbreiterungselement (22) eine zentrale Aussparung (24) für einen Zinken (12, 12') umfasst.

10. Aufsatz (16) nach einem der vorhergehenden Ansprüche,
**dadurch gekennzeichnet,**
**dass** der Aufsatz (16) ein Befestigungsmittel (20) zum, vorzugsweise lösbaren, Befestigen an einem Zinken (12, 12') aufweist.

11. Aufsatz (16) nach Anspruch 10,
**dadurch gekennzeichnet,**
**dass** das Befestigungsmittel (20) eine Klemm- und/oder Schraubeinheit umfasst.

12. Striegel (10) mit zumindest einem Zinken (12, 12') und einem Aufsatz (16) nach einem der vorhergehenden Ansprüche.

13. Striegel (10) nach Anspruch 12,
**dadurch gekennzeichnet,**
**dass** der Striegel als Doppelzinken (10) mit zwei einstückig geformten Zinken (12, 12') ausgebildet ist, und/oder dass der Zinken (12, 12') stabförmig ausgebildet ist.

14. Striegel (10) nach Anspruch 12 oder 13,
**dadurch gekennzeichnet,**
**dass** der Zinken (12, 12') zumindest eine Aussparung, insbesondere eine sich quer durch den Zinken (12, 12') erstreckende Öffnung, zum Befestigen des Aufsatzes (16) aufweist.

15. Bodenbearbeitungsvorrichtung mit zumindest einem Striegel (10) nach einem der Ansprüche 12 bis 14, insbesondere wobei zwischen 100 und 200, vorzugsweise 150, Zinken (12, 12') vorgesehen sind.

## Claims

1. Attachment (16) for a tine (12, 12') of a harrow (10) of a soil cultivating implement,
wherein the attachment (16) is designed to change the effective range of the tine (12, 12'), wherein
the attachment (16) has a sleeve (18),
**characterised in that**
the attachment (16) has a widening element (22) which has a larger diameter than the sleeve (18), wherein
the widening element (22) comprises a flat projection which extends symmetrically over the sleeve (18).

2. Attachment (16) according to claim 1,
**characterised in that**,
the widening element (22) is configured to be angular, oval or circular.

3. Attachment (16) according to claim 1 or 2,
**characterised in that**,
the flat projection is configured as a disc (22).

4. Attachment (16) according to claim 3,
**characterised in that**
the diameter of the disc (22) is between 40 mm and 70 mm, preferably 60 mm.

5. Attachment (16) according to any of the preceding claims,
**characterised in that**
the attachment (16) is configured to increase the effective range of the tine (12, 12'), especially to at least double, triple, quadruple or quintuple it.

6. Attachment (16) according to any of the preceding claims,
**characterised in that**
the inner diameter of the sleeve (18) is larger than the outer diameter of the tine (12, 12').

7. Attachment (16) according to any of the preceding claims,
**characterised in that**
the widening element (22) is disposed at a lower end region of the sleeve (18).

8. Attachment (16) according to any of the preceding claims,
**characterised in that**
the widening element (22) comprises a recess (24) for a tine (12, 12').

9. Attachment (16) according to any of the preceding claims,
**characterised in that**
the widening element (22) comprises a central recess (24) for a tine (12, 12').

10. Attachment (16) according to any of the preceding claims,
**characterised in that**
the attachment (16) has a fastening means (20) for, preferably detachable, fastening to a tine (12, 12').

11. Attachment (16) according to claim 10,
**characterised in that**
the fastening means (20) comprises a clamping and/or screwing unit.

12. Harrow (10) comprising at least one tine (12, 12') and an attachment (16) according to any of the preceding claims.

13. Harrow (10) according to claim 12,
**characterised in that**
the harrow is configured as a double tine (10) with two tines (12, 12') formed in one piece, and/or that the tine (12, 12') has a rod-shaped configuration.

14. Harrow (10) according to claim 12 or 13,
**characterised in that**
the tine (12, 12') has at least one recess, especially an opening extending transversely through the tine (12, 12'), for the purpose of fastening the attachment (16).

15. A soil cultivating device comprising at least one harrow (10) according to any of claims 12 to 14, especially wherein between 100 and 200, preferably 150, tines (12, 12') are provided.

## Revendications

1. Adaptateur (16) pour une dent (12, 12') d'une étrille (10) d'un dispositif de travail du sol,
l'adaptateur (16) étant réalisé pour modifier la zone d'action de la dent (12, 12'),
l'adaptateur (16) comprenant un manchon (18),
**caractérisé en ce que**
l'adaptateur (16) comprend un élément d'élargissement (22) qui présente un diamètre plus grand que le manchon (18),
l'élément d'élargissement (22) comprenant une saillie surfacique qui dépasse symétriquement au-delà du manchon (18).

2. Adaptateur (16) selon la revendication 1,
**caractérisé en ce que**
l'élément d'élargissement (22) est réalisé polygonal, ovale ou rond.

3. Adaptateur (16) selon la revendication 1 ou 2,
**caractérisé en ce que**
la saillie surfacique est réalisée sous forme de disque (22).

4. Adaptateur (16) selon la revendication 3,
**caractérisé en ce que**
le diamètre du disque (22) est compris entre 40 mm et 70 mm et est de préférence de 60 mm.

5. Adaptateur (16) selon l'une des revendications précédentes,
**caractérisé en ce que**
l'adaptateur (16) est réalisé pour augmenter la zone d'action de la dent (12, 12'), en particulier pour la doubler, la tripler, la quadrupler ou la quintupler au moins.

6. Adaptateur (16) selon l'une des revendications précédentes,
**caractérisé en ce que**
le diamètre intérieur du manchon (18) est plus grand que le diamètre extérieur de la dent (12, 12').

7. Adaptateur (16) selon l'une des revendications précédentes,
**caractérisé en ce que**
l'élément d'élargissement (22) est disposé dans une zone d'extrémité inférieure du manchon (18).

8. Adaptateur (16) selon l'une des revendications précédentes,
**caractérisé en ce que**
l'élément d'élargissement (22) présente une échancrure (24) pour une dent (12, 12').

9. Adaptateur (16) selon l'une des revendications précédentes,
**caractérisé en ce que**
l'élément d'élargissement (22) présente une échancrure centrale (24) pour une dent (12, 12').

10. Adaptateur (16) selon l'une des revendications précédentes,
**caractérisé en ce que**
l'adaptateur (16) comprend un moyen de fixation (20) pour la fixation de préférence détachable à une dent (12, 12').

11. Adaptateur (16) selon la revendication 10,
**caractérisé en ce que**
le moyen de fixation (20) comprend une unité de serrage et/ou de vissage.

12. Étrille (10) comportant au moins une dent (12, 12') et un adaptateur (16) selon l'une des revendications précédentes.

13. Étrille (10) selon la revendication 12,
**caractérisée en ce que**
l'étrille est réalisée sous forme de dent double (10) comprenant deux dents formées d'un seul tenant (12, 12'), et/ou **en ce que**
la dent (12, 12') est réalisée en forme de barreau.

14. Étrille (10) selon la revendication 12 ou 13,
**caractérisée en ce que**
la dent (12, 12') présente au moins une échancrure, en particulier une ouverture s'étendant en travers de la dent (12, 12'), pour la fixation de l'adaptateur (16).

15. Dispositif de travail du sol comportant au moins une étrille (10) selon l'une des revendications 12 à 14, dans lequel sont prévues en particulier entre 100 et 200, de préférence 150 dents (12, 12').
